(19) **Europäisches Patentamt**
**European Patent Office**
**Office européen des brevets**

(11) **EP 2 426 620 A1**

(12) **EUROPEAN PATENT APPLICATION**

(43) Date of publication:
**07.03.2012 Bulletin 2012/10**

(51) Int Cl.:
***G06K 9/00*** *(2006.01)*

(21) Application number: **10175076.8**

(22) Date of filing: **02.09.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(72) Inventors:
 • **Sundaram, Shiva Kumar**
 **10119 Berlin (DE)**
 • **Velisavljevic, Vladan**
 **10625 Berlin (DE)**

(74) Representative: **Vossius & Partner**
 **Siebertstrasse 4**
 **81675 München (DE)**

(71) Applicants:
 • **Deutsche Telekom AG**
 **53113 Bonn (DE)**
 • **Technische Universität Berlin**
 **10623 Berlin (DE)**

(54) **Feature extraction and automatic annotation of flash illuminated video data in unconstrained video streams**

(57)    A method of processing video data (1), comprises the steps of extracting the video data (1) into a plurality of frames (2), and analysing the plurality of frames (2) for detecting a flash illumination in the video data (1). Therein, analysing the plurality of frames (2) comprises the steps of partitioning each frame of the plurality of frames (2) into a plurality of segments (31) of a predefined size and calculating an average segment luminance component (41) for each segment of the plurality of segments (31) of each frame of the plurality of frames (2). By partitioning the video frames (2) into smaller segments (31) and subsequently using the transition in luminance component in each segment, an efficient and fine-tuned detection of flash illumination in the video data (1) is possible. Thereby, even flash illumination not affecting the whole frame can be detected which can be of decisive importance. Thus, when applying the method according to the invention flash detection in unconstrained user generated video clips or scenes can be significantly improved and accordingly the video clip and its frames can efficiently and sophistically be classified or rated as containing flash-illumination or not. Also, when detecting frames (2) that contain scenes with flash illumination according to the invention, the risk of incorrect recognition of flash illuminated scenes, e.g., by recognising cut points as flash illuminations, of false alarm can be reduced.

Fig. 1

## Description

Technical Field

The present invention relates to a method of processing video data according to the preamble of independent claim 1 and more particularly to an according computer program and a method of automatic annotation of video data. Such methods comprising the steps of extracting the video data into a plurality of frames and analysing the plurality of frames for detecting a flash illumination in the video data can, e.g., be used for automatic annotation and rating of video clips.

Background Art

In recent years, the development of video and networking technology has facilitated instant online access to huge amount of video material. In particular, due to an increase in internet and World Wide Web technologies such as the Web 2.0 technologies and availability of cheap high-performance cameras, user generated content has been remarkable increased. Nowadays, audio data, videos and pictures of everyday events can be instantaneously captured, documented and uploaded for millions of other users and consumers. This has created a strong need for automatic annotation of multimedia for efficient indexing, on-demand retrieval and browsing. To enable this, in addition to a variety of problems tackled in speech and audio processing, automatic content processing of video and also of images has been an active topic of research in the multimedia signal processing community.

Thereby, with regard to video content there have been efforts to automatically find meaningful segments in videos by considering a variety of explicit events based on the fundamental nature of video content. Such explicit events include scene-changes, shot-boundaries as for example described in Hanjalic (A. Hanjalic, "Shot-boundary detection: unraveled and resolved?", IEEE Transaction on Circuits and Systems for Video Technology, pages 90 - 105, Feb. 2002.), post-processed transitions and fades, and their evaluation can be based on object segmentation and tracking as for example described in Chen et al. (S.-C. Chen, M.-L. Shiu, C.-C. Zhang, and R. L. Kashyap, described in Chen et al. (S.-C. Chen, M.-L. Shiu, C.-C. Zhang, and R.L, and R.L. Kashyap, "Video scene change detection method using unsupervised segmentation and object tracking", IEEE International Conference on Multimedia Expo (ICME), 56-59, Aug. 2001).

In the last recent years a further topic in research of the multimedia signal processing community deals with the automatic detection of flash in images and video scenes or video clips, respectively. While there are other related applications of flash detection such as detecting and segmenting flash light sources in a video clip as, e.g., described by Qian et al. (X. Qian, G. Liu, and R.

Su, "Effective fades and flashlight detection based on accumulating histogram difference", IEEE Trans. on Circuits and Systems for Video Technology, 16(10), Oct. 2006), detecting video scenes illuminated by flash light can be of particular interest. As commonly known, flash affects the luminance and chrominance characteristics of scenes abruptly and locally only to a few adjacent frames of a video clip or video sequence, respectively. Existing flash detection methods commonly exploit a differential measurement of the luminance and chrominance characteristics across the temporal dimension. For example, Yeo et al. (B. L. Yeo and B. Liu, "Rapid scene analysis on compressed video", IEEE Trans. on Circuits and Systems for Video Technology, 5(6), Dec. 1995) analyse the difference between the mean of two adjacent frames and search for two consecutive sharp peaks, which indicate a flash light event. Further, Heng et al. (W. J. Heng and K. N. Ngan, "High accuracy flashlight scene determination for shot boundary detection", Signal Processing: Image Communications, 18(3), Mar. 2003) show that the first-order difference in the feature characteristics between two adjacent frames does not satisfactorily discriminate the flash light from other similar events. Hence, they extend the analysis to a series of several consecutive frames assuming the statistical characteristics of the frame features return to the previous state after the short time of flash appearance. Still further, Sugano et al. (M. Sugano, Y. Nakajima, H. Yanagihara, and A. Yoneyama, "A fast scene change detection on MPEG coding parameter domain", IEEE Int. Conf. on Image Processing, Chicago, IL, Oct. 1998) describe a higher order correlation, whereas adaptive thresholding based on intensity histogram differences is described by Zhang et al. (D. Zhang, W. Qi, and H. J. Zhang, "A new shot boundary detection algorithm", Proc. PCM, Beijing, China, Oct. 2001).

Another method of flash light detection in video clips is described by Truong et al. (B. T. Truong and S. Venkatesh, "Determining dramatic intensification via flashing lights in movies", IEEE Int. Conf. Multimedia Expo, Tokyo, Japan, Aug. 2001) which allows for detection of consecutive flash light events as long as they start with a strong luminance increase, continue with a constant luminance interval and end with the corresponding luminance decrease. Further, Heng et al. (W. J. Heng and K. N. Ngan, "Integrated shot boundary detection using object-based techniques", IEEE Int. Conf. on Image Processing, Kobe, Japan, Oct. 1999) propose a feature-based method, where the object contours in consecutive frames are matched and the intensity component is filtered across the frames. Further, a histogram-based method for detection of both smooth and sharp illumination transitions is proposed by Qian et al. (X. Qian, G. Liu, and R. Su, "Effective fades and flashlight detection based on accumulating histogram difference", IEEE Trans. on Circuits and Systems for Video Technology, 16(10), Oct. 2006), where the difference of histograms of the consecutive frames is analyzed and classified into several classes.

Still further, EP-A2 0 659 016 discloses a method to detect flashlight in images to prevent misrecognition of flashlight in video as a cut-point. The overall approach is to find inter-frame differences of a given frame with a template frame that defines a template cut-point, transition or flashlight containing frame. Additionally, it is particularly dealt with flashlight present in a part of the image frame. Also, Fanjun et al. (FANJUN QI ET AL: "Supervised classification for video shot segmentation" PROC. OF THE 2003 INTERNATIONAL CONFERENCE ON MULTIMEDIA AND EXPO: 6 - 9 JULY 2003, BALTIMORE MARRIOTT WATERFRONT HOTEL, BALTIMORE, MARYLAND, USA, IEEE OPERATIONS CENTER, US, vol. 2, 6 July 2003 (2003-07-06), pages 689-692, XP010650565, ISBN: 978-0-7803-7965-7) describe the idea of using trained classifiers to perform classification of cut-frame or non-cut-frame in a video sequence. It uses relevant features, training data and classifiers to perform this task. Further, Cotsaces et al. (COTSACES C ET AL: "Video shot detection and condensed representation. A review" IEEE SIGNAL PROCESSING MAGAZINE, IEEE SERVICE CENTER, PISCATAWAY, NJ, US LNKDDOI: 10.1109/MSP.2006.1621446, vol. 23, no. 2, 1 March 2006 (2006-03-01)) describe a state-of-the-art in shot-boundary detection. Therein, the basic premise is as follows: Different subjects or objects in a scene are recorded by multiple video cameras. Then according to the storyline during production or the editing process, segments from individual streams from the video cameras are combined to create the impression of the overall scene. Shot-detection involves the contiguous frames.

An important drawback of the flash detection methods for video clips discussed so far is that they are rather unqualified for detecting sectional flash illumination within a video clip or scene, respectively. However, for user generated unconstrained video content which covers a variety of scenes in indoor and/or outdoor environments and different lighting conditions, detection of such flash illumination of sections of a video scene can be of interest. Moreover, the location of the flash light source and the location of a subject in a scene can vary significantly leading to cases where additionally minor noticeable illumination changes occur such as, for example, on a subject's face which can anyhow be of decisive importance.

Therefore, there is a need for a method and/or a system allowing an improved flash illumination detection in unconstrained video clips or scenes, respectively, particularly if only sections of a scene are illuminated by the flash light.

<u>Disclosure of the Invention</u>

According to the invention this need is settled by a method of processing video data as it is defined by the features of independent claim 1, by a computer program as it is defined by the features of independent claim 15 and by a method of automatic annotation of video data as it is defined by the features of independent claim 16. Preferred embodiments are subject of the dependent claims.

The gist of the invention is the following: A method of processing video data comprises the steps of extracting the video data into a plurality of frames and analysing the plurality of frames for detecting a flash illumination in the video data. Thereby, analysing the plurality of frames particularly comprises the steps of partitioning each frame of the plurality of frames into a plurality of segments of a predefined size, and calculating an average segment luminance component for each segment of the plurality of segments of each frame of the plurality of frames. In this context, the term "flash" relates to light emission by a flash device typically when taking a picture or still-image in order to compensate for low light in an overall scene or in an area of interest within the scene. Such flash devices which are also known as flash bulb, simply flash or the like are often provided in cameras that capture still-images or pictures, respectively. In general such a flash is momentary, such that it lasts for a very short duration only which is typically determined by the opening-closing duration of a camera shutter. The term "flash illumination" in this context relates to the temporary reflection of flash light in a scene or video clip, respectively. As mentioned, the flash light can thereby originate from the flash device of a single camera, of multiple cameras or of related flash devices. Also in this context, the term "detection of a flash illumination in the video data" or "detection of flash-illuminated scenes" refers to finding the video frames in the video data captured by a video camera that are noticeable or distinct due to the reflection of the flash light originating from a single or multiple other cameras.

Further, the term "luminance component" in this context relates to a component representing a photometric measure of the luminous intensity per unit area of light travelling in a given direction which measure is presented in the video data. For example, when the video data or image is in a red, green and blue color model format (RGB-format) or is transformed into a RGB-format, the RGB components can be converted into the luminance component. Thereby, said conversion can be implemented by using floating point operations. Alternatively, said conversion can be approximated by using integer operations. To this end, RGB-components of the RGB-format can be converted into the luminance component by applying the formula $Y = W_R \cdot R + W_G \cdot G + W_B \cdot B$, wherein $Y$ is the luminance component, $R$ is the red-component of the RGB-format, $G$ is the green-component of the RGB-format, $B$ is the blue-component of the RGB-format, $W_R + W_G + W_B = 1$ and at least two of the coefficients $W_R$, $W_G$ and $W_B$ are chosen according to a colour model of the video data.

By partitioning the video frames into smaller segments and subsequently using the transition in luminance component in each segment an efficient and fine-tuned detection of flash illumination in the video data is possible. Thereby, even flash illumination not affecting the whole frame but only sections thereof can be detected which can be of decisive importance. Thus, when applying the method according to the invention flash detection in unconstrained user generated video clips or scenes can be significantly improved and accordingly the video clip and its frames can efficiently and sophistically be classified or rated as containing flash-illumination or not. Also, when detecting frames that contain scenes with flash illumination according to the invention, the risk of incorrect recognition of flash illuminated scenes, e.g., by recognising cut points as flash illuminations, or of false alarm can be reduced.

Preferably, each frame of the plurality of frames is essentially completely partitioned into the plurality of segments wherein the segments of each single frame of the plurality of frames are non-overlapping and have the same predefined size. Thereby, the segments can be essentially rectangular and have a predefined height and width or they can in particular be squared having a predefined side length. By means of such partition an efficient complete processing of the video data is possible.

Further, the segments of each single frame of the plurality of frames preferably are sorted by decreasing or increasing average segment luminance component. With such a sorted set of segments per frame an efficient further processing of the video data is possible, in particular with regard to comparing the average segment luminance components of consecutive frames.

Preferably, for each single segment of each single frame of the plurality of frames a difference between its average segment luminance component and the average segment luminance component of the corresponding single segment of the following or preceding consecutive single frame of the plurality of frames is calculated. In this context, the term "corresponding single segment" refers to the fact that if the segments of each single frame of the plurality of frames are sorted by average segment luminance component as described above, a single segment of a single frame of the plurality of frames preferably corresponds to the single segment of the following or preceding consecutive single frame having the same sort order. For example, the segment of frame no. 16 having third biggest average segment luminance component of all segments of frame no. 16 corresponds to the segment of frame no. 15 or frame no. 17 having third biggest average segment luminance component of all segments of frame no. 15 or frame number 17, respectively. Alternatively, particularly if the segments of each single frame of the plurality of frames are not sorted as described above, a single segment being at a specific position of its associated frame can correspond to a single segment being at the same position of the following or preceding consecutive single frame. For example, if the segments are rectangular and arranged in columns and rows, the segment in column no. 3 and row no. 2 of frame no. 12 corresponds to the segment in column no. 3 and row no.

2 of frame no. 13 or of frame no. 11, respectively. By evaluating such a difference, a comparably easy recognition of a flash illumination within a frame is possible. In particular, if the illumination change between corresponding segments of consecutive frames is comparably big, i.e. the difference is comparably big, a flash illumination within a frame can comparably easily be detected.

Therein, for each single frame of the plurality of frames a difference sum preferably is calculated from all differences of its segments. By means of such difference sums an efficient detection of a flash illumination within a frame is possible. In particular in applications of the method in which the location of the flash light illumination within a frame is not primarily important but only the fact that there is a flash illumination within the frame, such a difference sum can improve the performance of the video data processing. The difference sum can be calculated for each of the frames by applying the formula

$$\Delta B^{(t)} = \sum_{k=1}^{k=K} \left( b_k^{(t)} - b_k^{(t-1)} \right)^2$$

wherein $\Delta B^{(t)}$ is the difference sum, $b_k^{(t)}$ is the $k^{th}$ sorted average luminance value for the $t^{th}$ frame, $t$ is the frame number for $1 \leq t \leq T$ and $k$ is the segment number $1 \leq k \leq K$ of the corresponding frame.

Preferably, analysing the plurality of frames further comprises the step of calculating an average frame luminance component for each frame of the plurality of frames. Thus, in addition to the average segment illumination components and/or the differences and/or the difference sum of each frame a further measure to detect flash light illumination within a frame can be established per frame. Thus, the quality of the flash illumination detection per frame can be improved.

Preferably, analysing the plurality of frames further comprises the steps of applying histogram equalization to each frame of the plurality of frames, partitioning each equalized frame of the plurality of frames into a plurality of equalized segments of a predefined size, and calculating an average equalized segment luminance component for each equalized segment of the plurality of equalized segments of each equalized frame of the plurality of frames. Therein, the predefined size of the equalized segments of the equalized frames can correspond to the size of the segments of the frames mentioned above. Particularly, they can also be essentially rectangular and have a predefined height and width or they can be squared having a predefined side length. Establishing such equalized segment luminance components per frame can further improve the quality of flash illumination detection per frame within the method according to the invention.

Therein, each equalized frame of the plurality of frames preferably is essentially completely partitioned into the plurality of equalized segments wherein the equalized segments of each single equalized frame of the plurality of frames are non-overlapping and have the same predefined size. Also, the equalized segments of each single equalized frame of the plurality of frames preferably are sorted by decreasing or increasing average equalized segment luminance component. Further, for each single equalized segment of each single equalized frame of the plurality of frames an equalized difference between its average equalized segment luminance component and the average equalized segment luminance component of the corresponding single equalized segment of the following or preceding consecutive single equalized frame of the plurality of frames preferably is calculated. In this context, the term "corresponding" is identically used as described above in connection with the corresponding frames. Still further, for each single equalized frame of the plurality of frames an equalized difference sum preferably is calculated from all equalized differences of its equalized segments. The use of equalized frames with the method according to the invention as described above can particularly have corresponding advantageous effects as described above with regard the non-equalized frames. In particular, the additional calculation of average equalized segment luminance component and/or equalized differences and/or a equalized difference sum per frame allows to improve the quality of flash illumination detection per frame within the method according to the invention. The equalized difference sum can be calculated for each of the equalized frames by applying the formula

$$\Delta B^{*(t)} = \sum_{k=1}^{k=K} \left( b_k^{*(t)} - b_k^{*(t-1)} \right)^2$$

wherein $\Delta B^{*(t)}$ is the equalized difference sum, $b^{*(t)}$ is the $k^{th}$ sorted average equalized luminance value for the $t^{th}$ frame, $t$ is the equalized frame number for $1 \leq t \leq T$ and $k$ is the equalized segment number $1 \leq k \leq K$ of each of the equalized frames.

Preferably, analysing the plurality of frames further comprises the step of detecting flash illuminations by evaluating if the difference sum of each single one of the plurality of frames exceeds a predefined segments threshold and/or the average frame luminance component of each single one of the plurality of frames exceeds a predefined frame threshold and/or the equalized difference sum of each single one of the plurality of frames exceeds a predefined equalized segments threshold. By means of such thresholds a flash illumination can efficiently be detected within a frame.

Preferably, analysing the plurality of frames further comprises the step of reducing dimension of the difference sums of the plurality of frames and/or reducing dimension of average frame luminance components of the plurality of frames and/or reducing dimension of the equalized difference sums of the plurality of frames. Such dimension reduction allows for a further improved efficiency of the method according to the invention. In particular, such dimension reduction can be applied before the evaluation mentioned above such that that the complexity of the evaluation can be reduced. Therein, dimension reduction preferably is performed by applying principal component analysis. Principal component analysis (PCA) is commonly known in the art. In this context, it involves a mathematical procedure that transforms a number of possibly correlated variables such as, e.g., the difference sum, the equalized difference sum and/or the average frame luminance component per frame, into a smaller number of uncorrelated variables called principal components. The first principal component accounts for as much of the variability in the data as possible, and each succeeding component accounts for as much of the remaining variability as possible. PCA involves the calculation of the eigenvalue decomposition of a data covariance matrix or singular value decomposition of a data matrix, usually after mean centering the data for each attribute.

A further aspect of the invention relates to a computer program for processing video data comprising program code being adapted to execute the method of processing video data described above. With such a computer program, the method of processing video data can efficiently be implemented.

Another further aspect of the invention relates to a method of automatic annotation of video data, comprising the steps of detecting flash light illuminations within the video data by processing the video data according to the method of processing video data described above, counting a number of the detected flash light illuminations, and associating an annotation to the video data which correlates to the number the detected flash light illuminations within the video data. Thus, compared to other annotation methods for video data, the mentioned method of automatic annotation of video data includes detecting a more subtle but prominent and commonly occurring event. This is, camera-flash illuminated frames in unconstrained video. Like this, complimentary to the previously discussed video events, camera-flash illumination is taken as inherent annotation of selected salient parts of video clips which considers that fact that in most social events such as press conferences, celebrity red-carpet interviews, and sports etc., the video events indicating an important event are a combination of video and still photography. For instance, while press conferences are captured in video for television programming, reporters also use still-cameras to selectively capture photographs for print media. This is generally true for a variety of user generated content that covers indoor/outdoor events, spontaneous events such as accidents and celebrity interviews and non-spontaneous ones such as recitals and performances. Based on this considerations, the method of automatic annotation of video data can be used as a method of ranking of unconstrained video segments. Empirically, it can be stated that the importance of a social gathering is a function of the number of individuals participating in it, the variety of capture methods (audio, video, still images, text notes, etc.) used to document and other factors such as location. Expanding on this, the number of flashes occurring in a video scene is also an indicator of importance of that video scene.

Summarizing the above, a video camera typically can also record the same scene in which still-image cameras are used (for example, press conferences). When a momentary flash-illumination from such still-cameras is present, the video camera also captures the reflection as a marked change in the brightness to either a whole frame or certain segments of the frame. Again, this is typically within one frame of the video sequence. Thus, the number of flash-illuminations within frames of the video data can be used to efficiently rate the video data.

These and other aspects of the invention will be apparent from and elucidated with reference to the embodiment(s) described hereinafter.

Brief Description of the Drawings

The method of processing video data, the computer program and the method of automatic annotation of video data according to the invention are described in more detail hereinbelow by way of an exemplary embodiment and with reference to the attached drawings, in which:

Fig. 1    shows a schematic view of a features extraction procedure of an embodiment of the method of processing video data according to the invention within an embodiment of a method of automatic annotation of video data according to the invention;

Fig. 2    shows a schematic flow chart of the methods from Fig. 1; and

Fig. 3    shows a view of example of average luminance values per block of three consecutive frames of video data within the methods of Fig. 1.

Mode(s) for Carrying Out the Invention

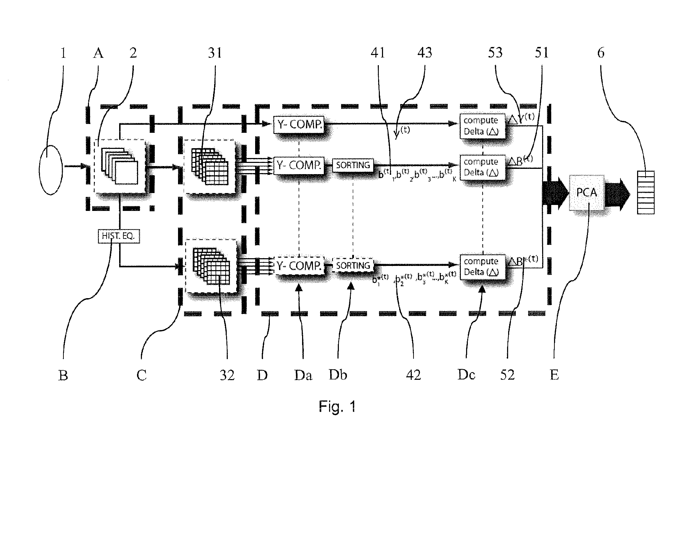

Fig. 1 shows an embodiment of the method of processing video data according to the invention, also referred to as processing method hereinbelow, which is particularly suitable for being used in a method of automatic annotation of video data according to the invention, also referred to as annotation method hereinbelow. In the processing method of Fig. 1 a video stream 1 as video data is extracted into a plurality of frames 2 in extraction step A. The frames 2 are further processed in three ways:

In a first way, each single one of the plurality of frames 2 is partitioned into a plurality of blocks 31 as segments in a partitioning step C. Each block 31 has a squared shape wherein the squares have a side length which is arranged such that the entire corresponding frame 2 is covered by the non-overlapping blocks 31. In a luminance component calculation step Da of a feature extraction step D, a Y-component as an average luminance component is computed for each block 31 of each frame 2. Thereafter, the Y-components of the blocks 31 are sorted in decreasing order per frame 2 in a luminance component sorting step Db of the feature extraction step D. This results in a set of sorted average luminance values $b_k^{(t)}$ 41 per frame 2, wherein $k$ indexes the sorted blocks 31 and $t$ indexes the frames 2. In a difference sum calculation step Dc of the feature extraction step D, a difference between the average luminance value 41 of each block 31 of each frame 2 and the average luminance value 41 of the same sort ordered block 31 of the preceding consecutive frame 2 is computed and theses differences are summarized per frame 2. This results in a difference sum $\Delta B^{(t)}$ 51 per frame 2.

In a second way, to each single one of the plurality of frames 2 histogram equalization is applied in an equalization step B and each single one of the plurality of equalized frames is partitioned into a plurality of blocks 32 as segments in the partitioning step C. Each equalized block 32 of the equalized frames has the same squared shape as the blocks 31 of the frames 2. In the luminance component calculation step Da of the feature extraction step D, a Y-component as an average equalized luminance component is computed for each equalized block 32 of each equalized frame. Thereafter, the Y-components of the equalized blocks 32 are sorted in decreasing order per equalized frame in the luminance component sorting step Db of the feature extraction step D. This results in a set of sorted equalized average luminance values $b_k^{*(t)}$ 42 per equalized frame, wherein $k$ indexes the sorted equalized blocks 32 and $t$ indexes the equalized frames. In the difference sum calculation step Dc of the feature extraction step D, a difference between the equalized average luminance value 42 of each equalized block 32 of each equalized frame and the equalized average luminance value 42 of the same sort ordered equalized block 32 of the preceding consecutive equalized frame is computed and theses differences are summarized per equalized frame. This results in an equalized difference sum $\Delta B^{*(t)}$ 52 per equalized frame.

In a third way, an average Y-component is computed as an average frame luminance component per single one of the plurality of frames 2 in the luminance component calculation step Da of the feature extraction step D. This results in an average luminance values $y^{(t)}$ 43 per frame 2, wherein again $t$ indexes the frames. In the difference sum calculation step Dc of the feature extraction step D, a difference between the luminance value 43 of each frame 2 and the luminance value 43 of the preceding consecutive frame 2 is computed which results in a difference luminance value $\Delta Y^{(t)}$ 53 per frame 2.

The resulting difference sums 51 of the first way, equalized difference sums 52 of the second way and difference luminance values 53 of the third way are then reduced in dimension by applying a principal component analysis (PCA) E. This results in a set of indicative features 6 which can be efficiently further processed.

The following applies to the rest of this description. If, in order to clarify the drawings, a figure contains reference signs which are not explained in the directly associated part of the description, then it is referred to previous description sections.

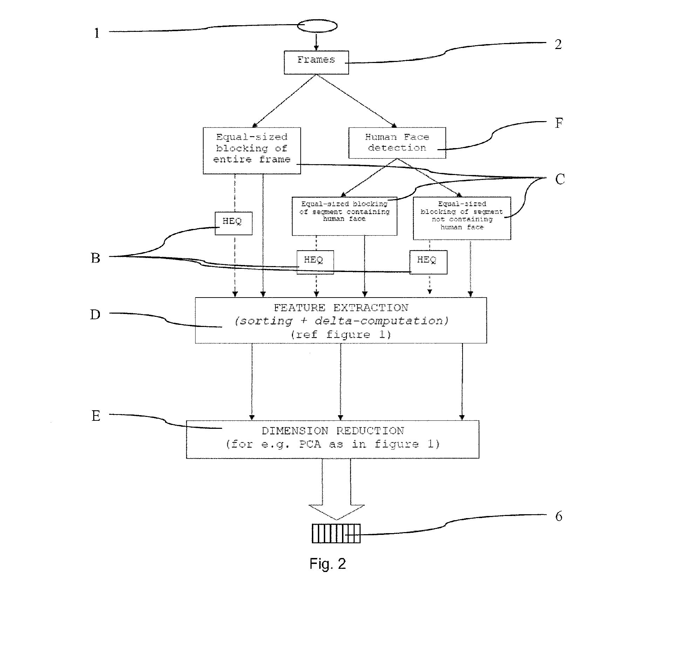

In Fig. 2 a flow chart of the processing method further comprising face recognition is shown which is also particularly suitable for being used in the annotation method. As can be seen, the frames 2 are further processed in additional two ways after the video stream 1 extracted into a plurality of frames 2:

In a fourth way, each single one of the plurality of frames 2 is sectioned into regions containing a human face in a human face detection step. Various procedures for performing human face detection applicable in this step are known in the art and depending on the intended application an appropriate according procedure can be applied in this step. The regions of each of the frames 2 containing a human face are then partitioned in the partitioning step C as described above, equalized in the equalization step B as described above and feature extracted in the feature extraction step D as described above.

In a fifth way, the regions of each of the frames 2 not containing a human face, i.e. the regions inverted to the regions of the fourth way of each of the frames, are partitioned in the partitioning step C as described above, equalized in the equalization step B as described above and feature extracted in the feature extraction step D as described above.

The resulting equalized face regions difference sums of the fourth way and the equalized non-face regions difference sums of the fifth way are then also reduced in dimension by applying the PCA E which additionally results in the set of indicative features 6 being efficiently further processable.

Thus, the processing method of Fig. 1 comprises a feature extraction procedure as follows: First, the given video stream 1 is decoded and converted to frames 2. Subsequently, the frames 2 are processed in the three separate ways: (i) The average luminance component Y of an entire frame is calculated. (ii) Each frame 2 is partitioned into the blocks 31 of size N × N, then the average luminance component of each block ($Y_{block}$) is calculated and the blocks are sorted in decreasing order of $Y_{block}$; sorting enables invariance to location of the illumination change within a frame. (iii) Histogram equalization is applied to the video frames 2 and then the blocking and sorting procedure from (i) is repeated for the equalized frames, as illustrated in Fig 1. Such histogram equalization enables adaptation to different lighting conditions across the video sequence 1. As illustrated in Fig. 2, the blocking steps, the luminance component extraction, sorting and computing the differences is also repeated for regions that contain human face and regions that do not contain a human face. Human face detection can be performed using any existing or available technique.

Generally, flash detection relies on abrupt change in illumination rather than the absolute illumination values. Therefore, after the sorting step Db, the change in illumination between blocks 31 and between equalized 32 is calculated in the difference sum calculation step Dc as follows: Let $b_k^{(t)}$ and $b^{*(t)}$ be the $k^{th}$ sorted average luminance value before and after histogram equalization for the $t^{th}$ frame, where $1 \leq t \leq T$ and $1 \leq k \leq K$ blocks. Then,

$$\Delta B^{(t)} = \sum_{k=1}^{k=K} \left( b_k^{(t)} - b_k^{(t-1)} \right)^2$$

$$\Delta B^{*(t)} = \sum_{k=1}^{k=K} \left( b_k^{*(t)} - b_k^{*(t-1)} \right)^2$$

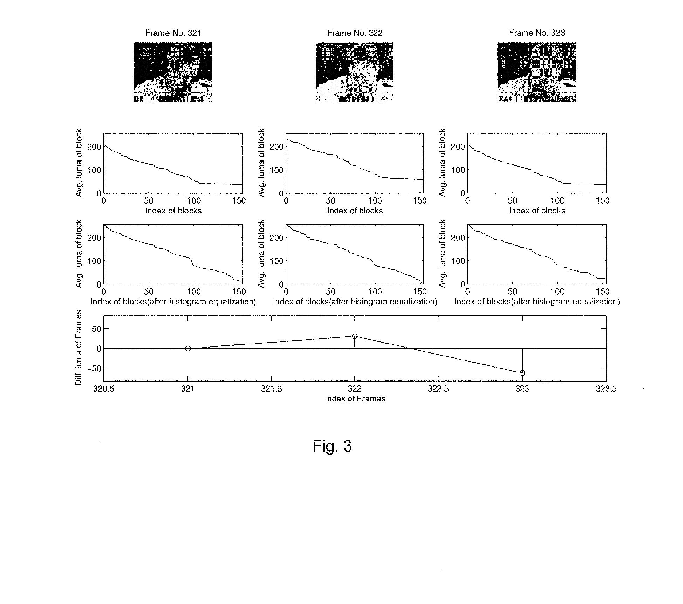

In addition to block-wise difference or delta computation, in the feature extraction procedure, the obvious and ideal case is accounted for where the flash saturates the luminance of the whole image frame 2. For this purpose also the difference or delta value $Y$ for each entire frame is computed in the luminance component calculation step. In Fig. 3 examples of resulting sorted average luminance values per block for three consecutive frames are illustrated. The second row of the four rows of Fig. 2 illustrates the $b_k^{(t)}$ values and the third row illustrates the $b_k^{*(t)}$ values for a given frame 2. From the figure it can be seen that the resulting curves change noticeably for the center frame no. 322 which is flash illuminated in comparison to the neighbouring consecutive frames 2.

Subsequently, the difference or delta values are augmented to obtain a N-tuple prototype. Without the face detection and blocking mentioned above, this results in a N=3 tuple, with face detection and blocking this results in N=5 tuple. The dimensions of can however be noisy and correlated for a given video sequence. Therefore, at the end of the feature extraction procedure, a dimension reduction step E or combination procedure is adopted. In particular, as shown in Fig. 1 principal component analysis (PCA) is applied such that at least the difference sums 51, the equalized difference sums 52 and the difference luminance values 53 are mapped onto their principal components 6. Alternatively, any linear or non-linear discriminant analysis can be applied. The features obtained are then used with a classifier to determine if a given video frame is flash illuminated or not. In particular, if the features exceed a predefined threshold, illumination is present. In that case according to the invention the video data can be annotated with regard to the amount of present illuminations detected.

While the invention has been illustrated and described in detail in the drawings and foregoing description, such illustration and description are to be considered illustrative or exemplary and not restrictive. It will be understood that changes and modifications may be made by those of ordinary skill within the scope and spirit of the following claims. In particular, the present invention covers further embodiments with any combination of features from different embodiments described above and below.

The invention also covers all further features shown in the Figs. individually although they may not have been described in the afore or following description. Also, the embodiments described in the figures and the description and single features thereof can be disclaimed from the subject matter of the invention.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method according to the invention. Any reference signs in the claims should not be construed as limiting the scope.

## Claims

1. Method of processing video data (1), comprising the steps of
   extracting the video data (1) into a plurality of frames (2), and
   analysing the plurality of frames (2) for detecting a flash illumination in the video data (1),
   **characterized in that** analysing the plurality of frames (2) comprises the steps of partitioning each frame of the plurality of frames (2) into a plurality of segments (31) of a predefined size, and
calculating an average segment luminance component (41) for each segment of the plurality of segments (31) of each frame of the plurality of frames (2).

2. Method according to claim 1, wherein each frame of the plurality of frames (2) is essentially completely partitioned into the plurality of segments (31) wherein the segments (31) of each single frame of the plurality of frames (2) are non-overlapping and have the same predefined size.

3. Method according to claim 1 or claim 2, wherein the segments (31) of each single frame of the plurality of frames (2) are sorted by decreasing or increasing average segment luminance component (41).

4. Method according to any one of the preceding claims, wherein for each single segment of each single frame of the plurality of frames (2) a difference between its average segment luminance component and the average segment luminance component of the corresponding single segment of the following or preceding consecutive single frame of the plurality of frames (2) is calculated.

5. Method according to claim 4, wherein for each single frame of the plurality of frames (2) a difference sum (51) is calculated from all differences of its segments (31).

6. Method according to any one of the preceding claims, wherein analysing the plurality of frames (2) further comprises the step of calculating an average frame luminance component (43) for each frame of the plurality of frames (2).

7. Method according to any one of the preceding claims, wherein analysing the plurality of frames (2) further comprises the steps of
   applying histogram equalization to each frame of the plurality of frames (2), partitioning each equalized frame of the plurality of frames into a plurality of equalized segments (32) of a predefined size, and calculating an average equalized segment luminance component (42) for each equalized segment of the plurality of equalized segments (32) of each equalized frame of the plurality of frames (2).

8. Method according to claim 7, wherein each equalized frame of the plurality of frames (2) is essentially completely partitioned into the plurality of equalized segments (32) wherein the equalized segments (32) of each single equalized frame of the plurality of frames (2) are non-overlapping and have the same predefined size.

**9.** Method according to claim 7 or claim 8, wherein the equalized segments (32) of each single equalized frame of the plurality of frames (2) are sorted by decreasing or increasing average equalized segment luminance component (42).

**10.** Method according to any one of claims 7 to 9, wherein for each single equalized segment of each single equalized frame of the plurality of frames (2) an equalized difference between its average equalized segment luminance component (42) and the average equalized segment luminance component (42) of the corresponding single equalized segment of the following or preceding consecutive single equalized frame of the plurality of frames (2) is calculated.

**11.** Method according to claim 10, wherein for each single equalized frame of the plurality of frames (2) an equalized difference sum (52) is calculated from all equalized differences of its equalized segments (32).

**12.** Method according to claim 5, claim 6 or claim 11, wherein analysing the plurality of frames (2) further comprises the step of detecting flash illuminations by evaluating if the difference sum of each single one of the plurality of frames exceeds a predefined segments threshold and/or the average frame luminance component of each single one of the plurality of frames exceeds a predefined frame threshold and/or the equalized difference sum of each single one of the plurality of frames exceeds a predefined equalized segments threshold.

**13.** Method according to claim 5, claim 6, claim 11 or claim 12, wherein analysing the plurality of frames (2) further comprises the step of reducing dimension of the difference sums of the plurality of frames and/or reducing dimension of average frame luminance components of the plurality of frames and/or reducing dimension of the equalized difference sums of the plurality of frames.

**14.** Method according to claim 13, wherein dimension reduction is performed by applying principal component analysis.

**15.** Computer program for processing video data comprising program code being adapted to execute the method according to any one of the preceding claims.

**16.** Method of automatic annotation of video data, comprising the steps of
detecting flash light illuminations within the video data by processing the video data according to the method of any one of claims 1 to 15,
counting a number of the detected flash light illuminations, and

associating an annotation to the video data which correlates to the number the detected flash light illuminations within the video data.

Fig. 1

1 ——

2 ——

Frames

F ——

Equal-sized blocking of entire frame

Human Face detection

C ——

Equal-sized blocking of segment containing human face

Equal-sized blocking of segment not containing human face

HEQ

B ——

HEQ

HEQ

D ——

FEATURE EXTRACTION
*(sorting + delta-computation)*
(ref figure 1)

E ——

DIMENSION REDUCTION
(for e.g. PCA as in figure 1)

6 ——

Fig. 2

Fig. 3

Europäisches
Patentamt

European
Patent Office

Office européen
des brevets

# EUROPEAN SEARCH REPORT

Application Number

EP 10 17 5076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YEO B-L ET AL: "RAPID SCENE ANALYSIS ON COMPRESSED VIDEO" IEEE TRANSACTIONS ON CIRCUITS AND SYSTEMS FOR VIDEO TECHNOLOGY, IEEE SERVICE CENTER, PISCATAWAY, NJ, US LNKD-DOI:10.1109/76.475896, vol. 5, no. 6, 1 December 1995 (1995-12-01), pages 533-544, XP000545960 ISSN: 1051-8215 | 1-6, 13-16 | INV. G06K9/00 |
| Y | * abstract, page 536, specifically IV.A and page 540, specifically V * * Figure 12, Tables II-XI and the penultimate sentence of VIII * | 7-12 | |
| X | EP 1 918 872 A2 (FOTONATION VISION LTD [IE]) 7 May 2008 (2008-05-07) | 1-15 | |
| Y | * paragraph [0022] - paragraph [0034] * | 7-12 | |
| X | EP 0 659 016 A2 (NIPPON TELEGRAPH & TELEPHONE [JP]) 21 June 1995 (1995-06-21) * abstract; figure 1 * * page 7, line 10 - line 34 * * page 11, line 45 - page 12, line 48 * * figures 7,8,21 * | 1,2 | |

-/--

TECHNICAL FIELDS
SEARCHED (IPC)

G06K
G06T

The present search report has been drawn up for all claims

| Place of search | Date of completion of the search | Examiner |
|---|---|---|
| The Hague | 4 November 2010 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 10 17 5076

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FANJUN QI ET AL: "Supervised classification for video shot segmentation" PROC. OF THE 2003 INTERNATIONAL CONFERENCE ON MULTIMEDIA AND EXPO: 6 - 9 JULY 2003, BALTIMORE MARRIOTT WATERFRONT HOTEL, BALTIMORE, MARYLAND, USA, IEEE OPERATIONS CENTER, US, vol. 2, 6 July 2003 (2003-07-06), pages 689-692, XP010650565 ISBN: 978-0-7803-7965-7 * abstract * * Section 3.1 and figure 1 * * Sections 3.2, 3.3 * | 1,2 | |
| A | US 2009/208106 A1 (DUNLOP HEATHER [US] ET AL) 20 August 2009 (2009-08-20) * abstract * * paragraph [0126] - paragraph [0141] * * figure 6 * | 1 | |
| A | BA TU TRUONG ET AL: "Determining dramatic intensification via flashing lights in movies" 20010822; 20010822 - 20010825, 22 August 2001 (2001-08-22), pages 60-63, XP010661773 ISBN: 978-0-7695-1198-6 | 1 | TECHNICAL FIELDS SEARCHED (IPC) |
| T | Wikipedia: "Wikipedia - Histogram Equalization" Wikipedia 13 October 2010 (2010-10-13), XP002607750 Retrieved from the Internet: URL:http://en.wikipedia.org/wiki/Histogram _equalization [retrieved on 2010-11-01] * the whole document * | | |

The present search report has been drawn up for all claims

| Place of search | Date of completion of the search | Examiner |
|---|---|---|
| The Hague | 4 November 2010 | Versluis, Anton |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................
& : member of the same patent family, corresponding
   document

EPO FORM 1503 03.82 (P04C01)

EP 2 426 620 A1

**ANNEX TO THE EUROPEAN SEARCH REPORT
ON EUROPEAN PATENT APPLICATION NO.**

EP 10 17 5076

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2010

| Patent document cited in search report | | Publication date | Patent family member(s) | | Publication date |
|---|---|---|---|---|---|
| EP 1918872 | A2 | 07-05-2008 | AT | 382917 T | 15-01-2008 |
| | | | AT | 437420 T | 15-08-2009 |
| | | | DE | 602006000400 T2 | 02-01-2009 |
| | | | EP | 1800259 A1 | 27-06-2007 |
| | | | WO | 2007025578 A1 | 08-03-2007 |
| | | | IE | 20050822 A2 | 23-08-2006 |
| | | | JP | 4234195 B2 | 04-03-2009 |
| | | | JP | 2009506688 T | 12-02-2009 |
| EP 0659016 | A2 | 21-06-1995 | DE | 69411257 D1 | 30-07-1998 |
| | | | DE | 69411257 T2 | 17-12-1998 |
| | | | US | 5642294 A | 24-06-1997 |
| US 2009208106 | A1 | 20-08-2009 | NONE | | |

EPO FORM P0459

For more details about this annex : see Official Journal of the European Patent Office, No. 12/82

**EP 2 426 620 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0659016 A2

**Non-patent literature cited in the description**

- **A. HANJALIC.** Shot-boundary detection: unraveled and resolved?. *IEEE Transaction on Circuits and Systems for Video Technology,* February 2002, 90-105
- **S.-C. CHEN ; M.-L. SHIU ; C.-C. ZHANG ; R.L. KASHYAP.** Video scene change detection method using unsupervised segmentation and object tracking. *IEEE International Conference on Multimedia Expo,* August 2001, 56-59
- **X. QIAN ; G. LIU ; R. SU.** Effective fades and flashlight detection based on accumulating histogram difference. *IEEE Trans. on Circuits and Systems for Video Technology,* October 2006, vol. 16 (10
- **B. L. YEO ; B. LIU.** Rapid scene analysis on compressed video. *IEEE Trans. on Circuits and Systems for Video Technology,* December 1995, vol. 5 (6
- **W. J. HENG ; K. N. NGAN.** High accuracy flashlight scene determination for shot boundary detection. *Signal Processing: Image Communications,* March 2003, vol. 18 (3
- **M. SUGANO ; Y. NAKAJIMA ; H. YANAGIHARA ; A. YONEYAMA.** A fast scene change detection on MPEG coding parameter domain. *IEEE Int. Conf. on Image Processing,* October 1998
- **D. ZHANG ; W. QI ; H. J. ZHANG.** A new shot boundary detection algorithm. *Proc. PCM,* October 2001
- **B. T. TRUONG ; S. VENKATESH.** Determining dramatic intensification via flashing lights in movies. *IEEE Int. Conf. Multimedia Expo,* August 2001
- **W. J. HENG ; K. N. NGAN.** Integrated shot boundary detection using object-based techniques. *IEEE Int. Conf. on Image Processing,* October 1999
- **FANJUN QI et al.** Supervised classification for video shot segmentation. *PROC. OF THE 2003 INTERNATIONAL CONFERENCE ON MULTIMEDIA AND EXPO: 6 - 9 JULY 2003, BALTIMORE MARRIOTT WATERFRONT HOTEL,* 06 July 2003, vol. 2, ISBN 978-0-7803-7965-7, 689-692
- **COTSACES C et al.** Video shot detection and condensed representation. A review. *IEEE SIGNAL PROCESSING MAGAZINE,* 01 March 2006, vol. 23 (2